(19) Europäisches Patentamt

European Patent Office

Office européen des brevets

(11) Veröffentlichungsnummer: **0 308 729 B1**

(12) **EUROPÄISCHE PATENTSCHRIFT**

(45) Veröffentlichungstag der Patentschrift: **15.04.92**

(21) Anmeldenummer: **88114623.7**

(22) Anmeldetag: **07.09.88**

(51) Int. Cl.⁵: **B23K 9/16**, B23K 9/02

(54) **Verfahren und Anordnung zum Bilden einer partiellen Schutzgasatmosphäre.**

(30) Priorität: **21.09.87 DE 3731729**

(43) Veröffentlichungstag der Anmeldung:
**29.03.89 Patentblatt 89/13**

(45) Bekanntmachung des Hinweises auf die
Patenterteilung:
**15.04.92 Patentblatt 92/16**

(84) Benannte Vertragsstaaten:
**BE DE FR**

(56) Entgegenhaltungen:
**FR-A- 2 578 957**
**US-A- 3 736 400**
**US-A- 3 994 429**

(73) Patentinhaber: **SIEMENS AKTIENGESELL-
SCHAFT**
**Wittelsbacherplatz 2**
**W-8000 München 2(DE)**

(72) Erfinder: **Müller, Ewald, Dipl.-Ing.**
**Welluckenweg 9**
**W-8524 Neunkirchen am Brand(DE)**
Erfinder: **Teig, Reinhard, Dipl.-Ing.**
**Fliederweg 18**
**W-8520 Erlangen(DE)**

EP 0 308 729 B1

**Beschreibung**

Die Erfindung bezieht sich auf ein Verfahren zum Bilden einer partiellen Schutzgasatmosphäre für zwei in einem Behälter in definiertem Abstand zueinander angeordneten an ihren Enden miteinander zu verschweißende Rohre, die schwer oder nicht zugänglich sind, von denen eines durch eine Öffnung einer Wand in den Behälter eingeführt ist, insbesondere für Wärmetauscher, wobei eine Hülle über die zu verschweißenden Rohre gestülpt wird.

Bei der Reparatur von Wärmetauschern - Ausbau eines alten Rohrendes und Einbau eines neuen - ist es erforderlich, daß auf der Sekundärseite des Wärmetauschers das gesamte Volumen mit Schutzgas gefüllt wird, damit die erforderliche Schutzgasatmosphäre hergestellt wird. Dies erfordert das mehrfache Spülen des sekundärseitigen Wärmetauschervolumens. Zusätzlich sind Maßnahmen erforderlich, um die geforderte Schutzgasqualität bereitzustellen, z.B. Vorevakuierung, Abdichten von Öffnungen, Montage der Anschlüsse, Bereitstellung eines umfangreichen Schutzgasversorgungssystems ect. Darüber hinaus muß der Feuchtegehalt begrenzt werden, wodurch der Aufwand durch ein zusätzliches Trocknungssystem weiter erhöht wird. Eine Verschmutzung des Schweißnahtbereichs durch Ablagerung (Staub) kann dabei überhaupt nicht verhindert werden.

Aus der US-A-3 994 429 ist eine Vorrichtung bekannt, die in das Innere eines Rohres oder eines Behälters eingeführt werden kann und um eine Schweißzone ein begrenztes Volumen für eine Schutzgasatmosphäre bildet. Diese Vorrichtung spannt sich im Inneren des Rohres oder des Behälters schirmartig über der Schweißzone auf und stützt sich n der Rohr- bzw. Behälterinnenwand ab.

In der US-A-3 736 400 ist ein Verfahren zum Verschweißen von Rohren offenbart, bei dem in die beiden Rohrenden jeweils Dichtelemente aus einem wasserlöslichen Werkstoff eingeführt werden. Im Innenraum der Rohre wird so ein schutzgasbeaufschlagtes begrenztes Volumen geschaffen, in dem sich eine Atmosphäre mit hoher Schutzgasqualität aufbauen läßt. Da die Dichtelemente wasserlöslich sind, können sie nach dem Verschweißen der Rohre leicht entfernt werden. Bei dem bekannten Verfahren muß das Schutzgas von außen an die Nahtstelle herangebracht werden und gelangt über den Nahtspalt in das Innere der Rohre.

Aus der FR-A-25 78 957 ist bekannt, die miteinander zu verschweißenden Rohre mit einer Manschette zu umgeben, um so im Bereich der Schweißnaht eine neutrale Schutzgasatmosphäre am Außenumfang des Rohres herzustellen. Diese Manschette wird von außen an die Verbindungsstelle herangeführt.

Diese bekannten Vorrichtungen sind nicht geeignet, Rohre miteinander zu verschweißen, die von außen nicht zugänglich sind.

Der Erfindung liegt die Aufgabe zugrunde, in einem schwer oder nicht zugänglichen Außenbereich von zwei an ihren Enden miteinander zu verschweißende Rohre partiell eine Schutzgasatmosphäre mit geforderter Qualität zu bilden.

Diese Aufgabe wird durch die Merkmale des Anspruchs 1 gelöst.

Das erfindungsgemäße Verfahren zeichnet sich durch eine erhebliche Reduzierung der Reparaturzeit, durch Reduzierung des Schutzgasverbrauchs sowie durch eine die Schweißnaht schützende Wirkung aus. Die sonst erforderliche Zusatzmaßnahmen zur Vorbereitung des Sekundärteils entfallen.

Als besonders vorteilhaft erweist es sich, wenn die Hülle aus einem wasserlöslichen Werkstoff ist. Durch das bei Wärmetauschern betriebsmäßig notwendige Füllen des Sekundärkreises mit Wasser wird die Hülle aufgelöst. Ein spezielles Auflösungsverfahren für die Hülle oder das Entfernen der Hülle entfällt.

Vorzugsweise kann als Werkstoff eine Kunststofffolie aus Polyvinilalkohol (im Handel unter MOWIOL oder auch LONZA PVAL-FOLIE bekannt) verwandt werden. Dieser Werkstoff zeichnet sich durch seine in der Schweißtechnik bewährten Eigenschaften sowie durch seine in aufgelöster Form umweltfreundlichen Eigenschaften aus. Durch den Folienwerkstoff wird das Bilden von schlauchförmigen aufblasbaren Kammern erleichtert. Zweckmäßigerweise kann als Werkstoff auch eine Cellulose Polymere-Verbindung (im Handel unter DISSOLVO-Dämmpapier bekannt) verwandt werden. Neben dem Vorzug der rückstandslosen Auflösung kann diesem Papierwerkstoff durch eine entsprechende Faltung die gewünschte Kammerform vorgegeben werden.

Es ist günstig, an einen zur Plazierung der Hülle dienenden rohrförmigen Rundkörper, der im Außendurchmesser kleiner als der kleinste Rohrdurchmesser ist am Umfang eine Austellvorrichtung für die Hülle anzuordnen. Somit ist es möglich, die Hülle auch in Rohrbereichen, die nicht händisch zugänglich sind, an die vorgesehene Schweißstelle zu bringen und auszustellen.

In vorteilhafter Ausgestaltung ist die Austellvorrichtung durch ausfahrbare Klinken ausgebildet. So können flexible schlauchförmige Hüllen sicher und einfach über zwei Rohrenden gestülpt werden. Besonders einfach ist es, wenn die Ausstellvorrichtung durch ausfahrbare Spreizfedern ausgebildet ist. Diese erlaubt mit einem Minimum an Aufwand eine zuverlässige Anbringung einer Hülle. Sie zeichnet sich durch ihren besonders einfachen und robusten Aufbau aus.

Die Erfindung wird nachfolgend beispielshalber näher erläutert.

Es zeigen:

FIG 1 bis 8  die erfindungsgemäßen Verfahrensschritte bei einer Rohr-Rohranordnung,

FIG 9 bis 12  die erfindungsgemäßen Verfahrensschritte bei einer Rohr-Bodenanordnung,

FIG 13  eine Anordnung mit Ausstellvorrichtung in Form von Klinken,

FIG 14  eine Anordnung mit Ausstellvorrichtung in Form von Spreizfedern.

Zur Reparatur eines Dampferzeugerheizrohres wird dieses von der Innenseite her über der fehlerhaften Stelle abgetrennt und durch den Boden 15 entfernt. Nach Bearbeitung der Stirnfläche des im Wärmetauscher verbliebenen Rohrendes 6a wird ein neu einzusetzendes Rohr 6b bis auf einen definierten Abstand 3 in den Wärmetauscherboden 15 eingeführt.

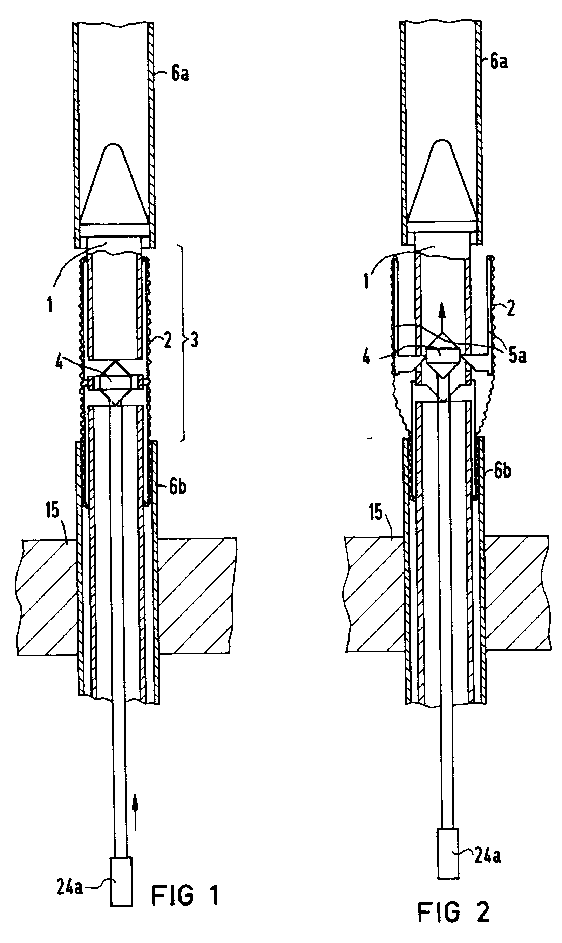

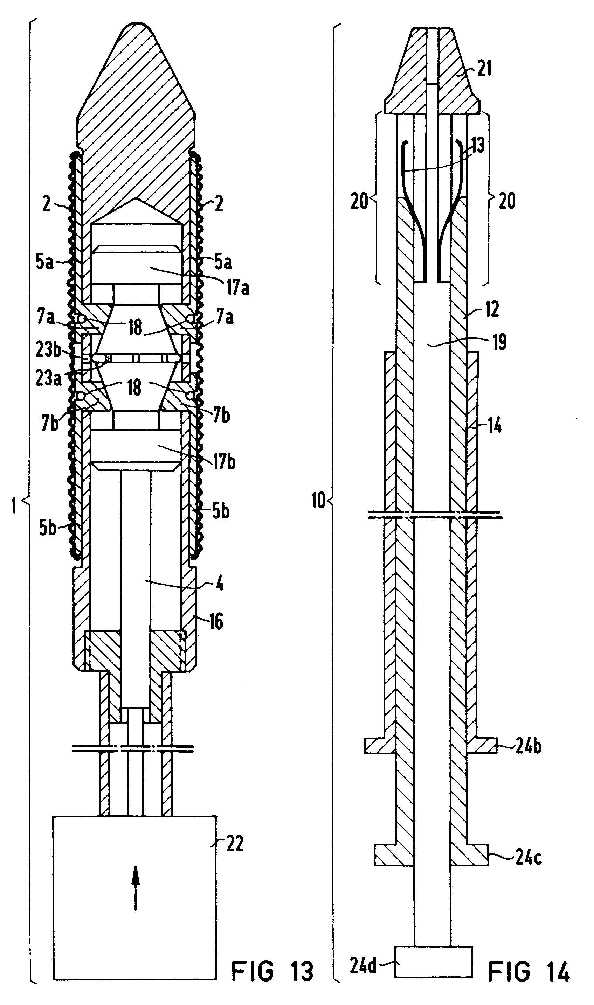

FIG 1: Eine als Werkzeug 1 dienende Anordnung nach FIG 13 wird mit einer auf der Außenseite des Werkzeuges 1 angeordneten Hülle 2 durch das neu einzusetzende Rohr 6b in den Zwischenraum 3 zwischen den beiden Rohren 6a, 6b geführt.

FIG 2: Durch das Vorschieben eines Stellkolbens 4 wird die obere Klinkenebene 5a mit der darumliegenden Hülle 2 auf ein Maß grösser als der Rohraußendurchmesser nach außen gedrückt. In dieser Ausführung des Werkzeuges 1 ist eine manuelle Betätigung des Stellkolbens 4 mittels eines Handgriffes 24a vorgesehen.

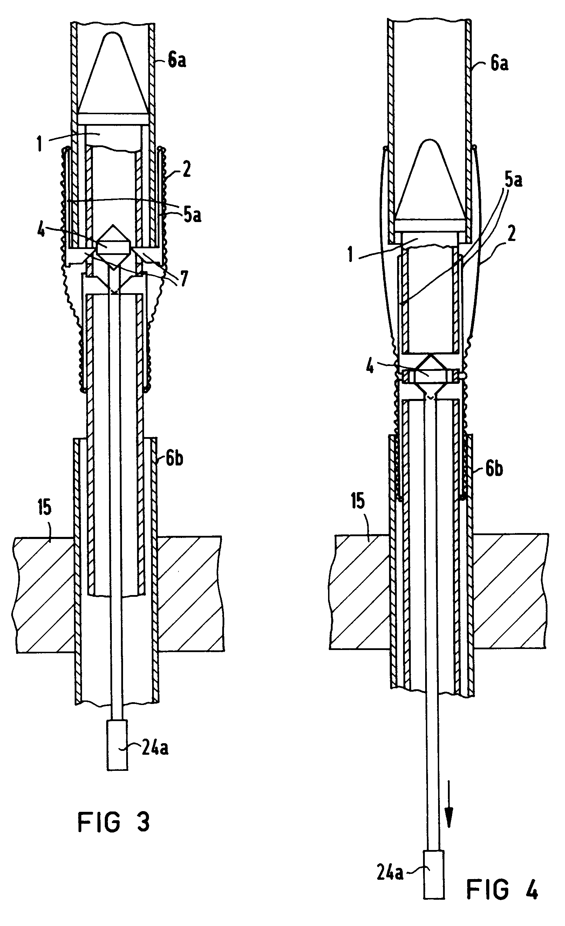

FIG 3: Durch Vorwärtsschieben des gesamten Werkzeuges 1 bis zum Anschlag des Rohres 6a an die radialen Nocken 7 werden die Klinken 5a mit der darumliegenden Hülle 2 über das Rohrende 6a gestülpt. Durch leichtes Zurückziehen des Stellkolbens 4 am Handgriff 24a wird die Ausdehnung der Hülle 2 so verringert, daß ihr verstärkter Rand am Rohrende 6a gehaltert wird. Durch Zurückziehen des gesamten Werkzeuges 1 werden die nun dicht am Rohr 6a anliegenden Klinken 5a in Position zwischen den Rohren 6a, 6b gebracht.

FIG 4: Das Zurückziehen des Stellkolbens 4 bewirkt nun das Einfahren der oberen Klinkenebene 5a.

Zur Befestigung der Hülle 2 auf dem zweiten Rohrende 6b wird nun gleichermaßen verfahren.

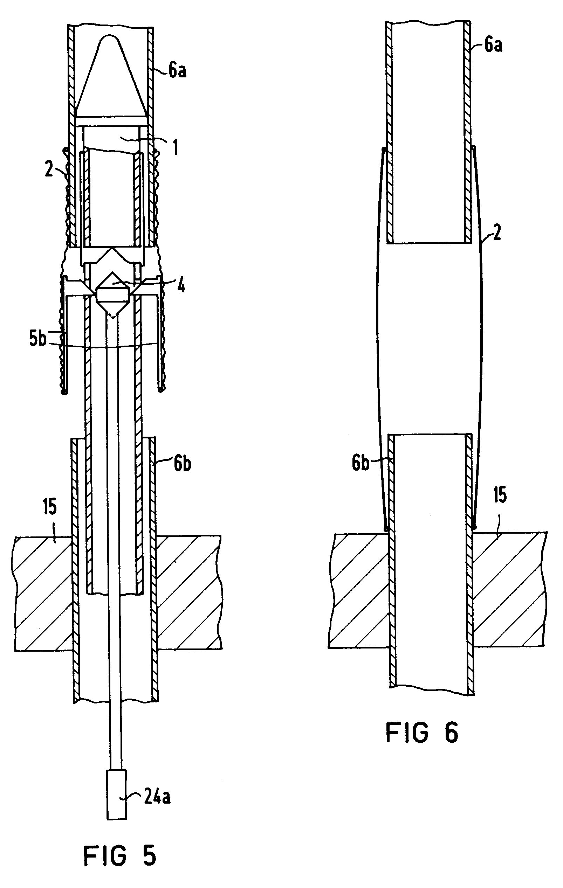

FIG 5: Die untere Klinkenebene 5b wird in Position zwischen den beiden Rohrstücken 6a, 6b gebracht. Durch Zurückziehen des Stellkolbens 4 an den unteren Anschlag werden die Klinken 5b mit der Hülle 2 nach außen gefahren und dann durch Zurückziehen des Werkzeuges 1 über das zweite Rohrende 6b gestülpt.

FIG 6: Nach Haltern der Hülle 2 am zweiten Rohrende 6b kann das Werkzeug 1 aus dem Rohrbereich entfernt werden.

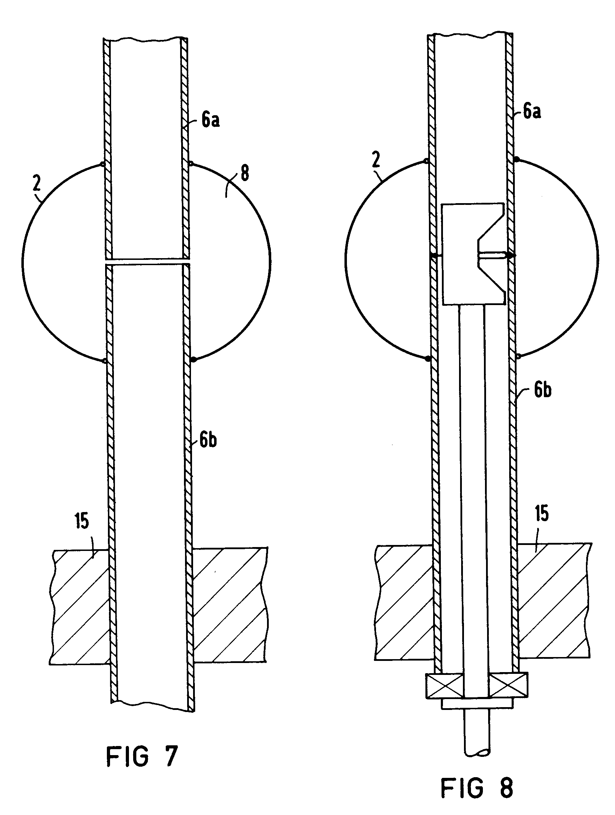

FIG 7: Es folgt das Zusammenschieben der Rohre 6a, 6b bis auf einen geringen Abstand, der für die Einleitung von Schutzgas erforderlich ist. Während des Zusammenschiebens kann schon eine Spülung des Innenraumes mit Schutzgas erfolgen. Gleichzeitig wird dadurch die Hülle 2 geweitet, so daß die gewünschte Schutzgaskammer 8 entsteht.

FIG 8: Ist die gewünschte Schutzgasatmosphäre hergestellt, werden die Rohre 6a, 6b aneinandergeschoben und für den darauffolgenden Schweißvorgang zentriert. Für das Entfernen der Hülle 2 nach erfolgreichem Schweißvorgang sind keine Maßnahmen erforderlich, da die Hülle 2 wasserlöslich ist. Durch das betriebsmäßig notwendige Auffüllen des Wärmetauschers mit Wasser wird die Hülle 2 rückstandslos aufgelöst.

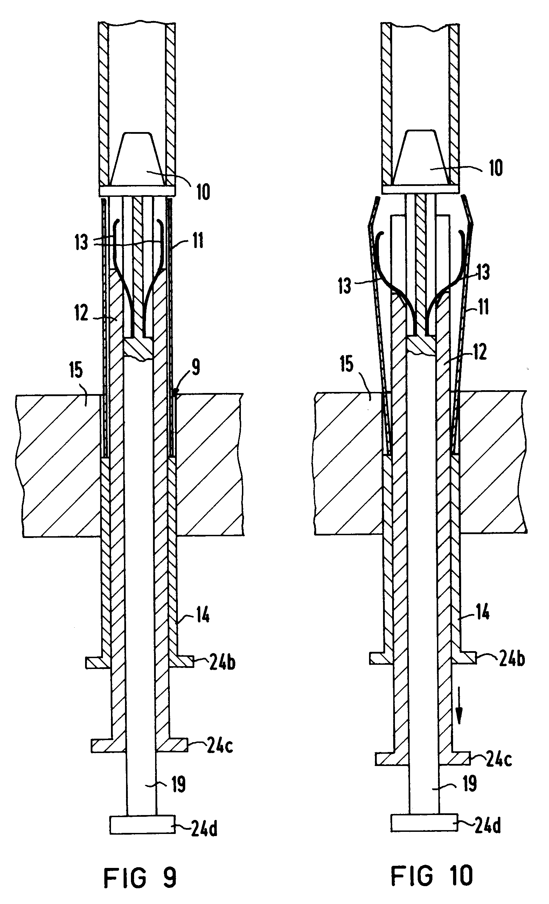

In FIG 9 bis 12 werden die Verfahrensschritte bei Anwendung in unmittelbarer Nähe eines Bodens befindlichen Schweißstelle gezeigt. Dabei wird ein Werkzeug 10, wie in FIG 14 und im dazugehörigen Beschreibungstext näher beschrieben, verwendet.

FIG 9: Durch eine Öffnung 9 in einem Wärmetauscherboden 15, durch die ein fehlerhaftes Rohrstück entfernt wurde, wird mittels eines Werkzeuges 10 eine gefaltete und auf Cellulosebasis hergestellte Hülle 11 in den Behälter eingeführt. Das Werkzeug 10 weist zur manuellen Betätigung eines Stellrohres 12, eines Positionierrohres 14 und eines Grundkörpers 19 Handgriffe 24b, c, d auf.

FIG 10: Durch Verschieben des Stellrohres 12 werden Spreizfedern 13 mit der darumliegenden Hülle 11 nach außen gestellt.

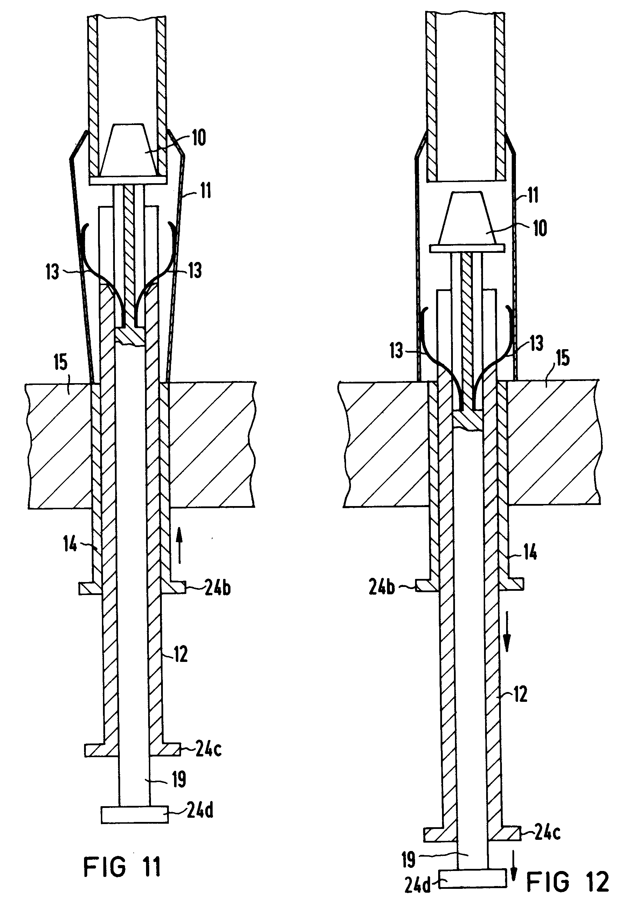

FIG 11: Die nun geweitete Hülle 11 kann mittels eines Positionierrohres 14 über das Rohrende 5a geschoben werden. Die Hülle 11 wird soweit übergestülpt, bis sie sich ganz im Behälter befindet.

FIG 12: Durch Zurückziehen des Werkzeuges 10 mit ausgestellten Spreizfedern 13 wird die Hülle 11 über ihre gesamte Länge gleichmäßig aufgeweitet und dicht an den Boden 15 herangeschoben. Durch abermaliges Verstellen des Stellrohres 12 werden die Spreizfedern 13 eingefahren, wonach das Werkzeug 10 aus dem Arbeitsbereich entfernt werden kann. Hierauf folgt das Spülen der Kammer mit Schutzgas. Durch die natürliche Undichtigkeit der Hülle kann das noch vorhandene Gasgemisch in den umliegenden Raum entweichen.

Danach erfolgt das Einbringen und die für den Schweißvorgang erforderliche Zentrierung des Rohres 5b. Aufgrund der Wasserlöslichkeit der Hülle 11 braucht auch hier keine weitere Entfernung der Hülle vorgesehen werden. Sie löst sich nach dem betriebsmäßigen Füllen des Dampferzeugers mit Wasser selbständig und rückstandslos auf.

In FIG 13 ist eine als Werkzeug 1 dienende Anordnung mit einer Ausstellvorrichtung in Form von Klinken dargestellt. Ein rohrförmiger Grundkörper 16 ist an seiner Außenseite in einer Vertiefung mit Klinken 5a, 5b versehen, die mit ihren radial nach innen ragenden Nocken 7a, 7b auf einem konischen Teil eines Stellkolbens 4 aufliegen. Der Stellkolben 4 ist in Längsrichtung durch einen pneumatischen oder elektromagnetischen Antrieb 22 verschiebbar, wobei die Klinken 5a, 5b jeweils für beide Richtungen den Anschlag für den Kolbenkörper 17a, 17b darstellen. Der Stellkolben 4 kann jedoch auch, wie in FIG 1 bis 8 dargestellt, von Hand betätigt werden. Wird der Stellkolben 4 in eine Richtung bewegt, so wird eine Klinkenebene 5a, 5b, deren Klinken auf dem konischen Teil des Stellkolbens 4 laufen, nach außen gestellt. Die in den Klinken 5a, 5b vorgesehenen Federn 18 bewirken beim Zurücksetzen des Stellkolbens 4 das Zurückziehen der Klinken 5a, 5b in die Ausgangslage. Der Stellkolben 4 und der Grundkörper 16 sind mit Öffnungen 23a, 23b versehen. Einerseits kann beim Einbringen der Hülle 2 so mittels Unterdruck die Hülle 2 dicht an dem Werkzeug 1 gehalten werden. Andererseits kann auch schon während des Ausstellens der Hülle Schutzgas zur Spülung eingebracht werden.

In FIG 14 ist eine als Werkzeug 10 dienende Anordnung mit einer Ausstellvorrichtung in Form von Spreizfedern näher erläutert. Auf einem rohrförmigen Grundkörper 19 ist ein bewegliches Stellrohr 12 angeordnet. Die in Nuten 20 am Grundkörper 19 befestigten und nach außen drückenden Spreizfedern 13 können durch das Einschieben des Stellrohres 12 in das Werkzeug zurückgedrückt werden und sind somit in den Nuten 20 des Grundkörpers 19 versenkt. Die Spitze 21 des Werkzeugs kann so ausgestaltet sein, daß sie verschlußähnlich auf ein Rohrende gesetzt werden kann. Um das Stellrohr 12 ist ein bewegliches Positionierrohr 14 angeordnet. Diese Ausführung ist für eine manuelle Bedienung mit Handgriffen 24b, c, d an den Rohren 14, 12 und am Grundkörper 19 ausgerüstet. Es ist jedoch auch möglich, einen Antrieb vorzusehen.

**Patentansprüche**

1. Verfahren zum Bilden einer partiellen Schutzgasatmosphäre für zwei in einem Behälter in definiertem Abstand zueinander angeordneten, an ihren Enden miteinander zu verschweißende Rohre (6a, 6b), die schwer oder nicht zugänglich sind, von denen eines durch eine Öffnung (9) einer Wand in den Behälter eingeführt ist, insbesondere für einen Wärmetauscher, wobei eine Hülle (2, 11) über die zu verschweißenden Rohre (6a, 6b) gestülpt wird, dadurch gekennzeichnet daß die Hülle (2, 11) aus einem wasserlöslichen Werkstoff besteht und durch das eine Rohr (6b) oder durch die für das Rohr (6b) in der Wand des Behälters vorgesehene Öffnung (9) an die Schweißstelle gebracht wird, daß die Hülle (2, 11) dort ausgestellt und über beide Rohrenden (6a, 6b) gestülpt bzw. über das eine Rohrende (6a) gestülpt und über der in der Wand des Behälters für das andere Rohr (6b) vorhandenen Öffnung (9) angeordnet wird, daß dann die zwei Rohrenden (6a, 6b) bis auf einen geringen Abstand aneinandergeschoben werden, daß hiernach durch den zwischen den Rohren (6a, 6b) bestehenden Zwischenraum (3) Schutzgas in die um die zu schweißende Stelle gebildete Kammer (8) eingeleitet wird, und daß sodann die Rohre (6a, 6b) in der gewünschten Position zum Verschweißen zentriert werden.

2. Verfahren nach Anspruch 1, **dadurch gekennzeichnet,** daß als Werkstoff für die Hülle (2, 11) eine Kunststoffolie aus Polyvinylalkohol dient.

3. Verfahren nach Anspruch 1, **dadurch gekennzeichnet,** daß als Werkstoff für die Hülle (2, 11) eine Cellulose-Polymer-Verbindung dient.

4. Verfahren nach einem der Ansprüche 1 bis 3, **dadurch gekennzeichnet,** daß die Hülle (2, 11) im wesentlichen zylinderförmig ausgebildet ist.

5. Anordnung zur Durchführung des Verfahrens nach Anspruch 1 mittels einer über die zu verschweißenden Rohre (6a, 6b) gestülpten Hülle (2, 11), **gekennzeichnet durch** folgende Mittel:
   a) einem in die zu verschweißenden Rohre (6a, 6b) einführbaren rohrförmigen Grundkörper (16, 19),
   b) einer an seinem Umfang angeordneten Hülle (2, 11) aus einem wasserlöslichen Werkstoff,
   c) Am Grundkörper (16, 19) angeordnete Mitteln (4, 4a, 5b, 7, 12, 13) zum Ausstellen und Überstülpen der Hülle (2, 11) über die einander zugewandten Rohrenden (6a, 6b).

6. Anordnung nach Anspruch 5, **gekennzeichnet durch**
   a) einen rohrförmigen Grundkörper (16) mit einem ersten und einem zweiten Ende;
   b) einem darin axial angeordneten längsverschiebbaren Stellkolben (4), der an dem zweiten Ende ein konisches Teil aufweist;

c) einem an dem ersten Ende angeordneten Linearantrieb (22) zur Betätigung des Stellkolbens (4);

d) an der Außenseite des Grundkörpers (16) angeordnete, axial anliegende Klinken (5a);

e) an den Klinken (5a) radial angeordnete Nocken (7a), welche durch Öffnungen im Grundkörper (16) auf den konischen Teil des Stellkolbens (4) aufliegen, und

f) Federn (18), die ringförmig am Umfang des Grundkörpers (16) in eine Nut der Klinken (5a, 5b) angeordnet sind,

wobei die Klinken (5a) durch Betätigung des Stellkolbens (4) radial nach außen stellbar und in beiden axialen Richtungen über die Rohre (6a, 6b) stülpbar sind.

7. Anordnung zur Durchführung des Verfahrens nach Anspruch 5, **gekennzeichnet durch:**

a) einen rohrförmigen Grundkörper (19) mit einem ersten und zweiten Enden;

b) radial nach außen federnde Spreizfedern (13), die am ersten Ende in einer Längsnut (20) des Grundkörpers (19) angeordnet sind und zum ersten Ende gerichtet ausspreizen;

c) ein rohrförmiges Stellrohr (12), das den Grundkörper (19) längsverschiebbar umhüllt und das bei Längsbewegung in Richtung des ersten Endes die Spreizfedern (13) in die Nuten (20) drückt und

d) ein rohrförmiges Positionierrohr (14), das längsverschiebbar das Stellrohr (12) umhüllt.

**Claims**

1. Process for forming a partial protective-gas atmosphere for two tubes (6a, 6b) which are to be welded together at their ends, are arranged in a vessel mutually spaced apart by a given distance and are accessible with difficulty or not at all, one of which is introduced through an aperture (9) in a wall into the vessel, particularly for a heat exchanger, whereby a sheath (2, 11) is placed over the tubes (6a, 6b) to be welded, characterised in that the sheath (2, 11) is made of a water-soluble material and is brought to the welding location through one of the tubes (6b) or through the aperture (9) provided for the tube (6b) in the wall of the vessel, in that the sheath (2, 11) is spread out there and is placed over the ends of both tubes (6a, 6b) or the end of one tube (6a) and is arranged over the aperture (9) provided in the wall of the vessel for the other tube (6b), in that then the two tube ends (6a, 6b) are pushed towards each other until a small clearance remains, in that protective gas is subsequently introduced through the intermediate space (3) existing between the tubes (6a, 6b) into the chamber (8) formed about the location to be welded, and in that the tubes (6a, 6b) are then centred in the desired position for welding.

2. Process according to claim 1, characterised in that a plastic film of poly vinyl alcohol is used as the material for the sheath (2, 11).

3. Process according to claim 1, characterised in that a cellulose polymer compound is used as the material for the sheath (2, 11).

4. Process according to one of claims 1 to 3, characterised in that the sheath (2, 11) is substantially of cylindrical shape.

5. Arrangement for carrying out the process according to claim 1 by means of a sheath (2, 11) placed over the tubes (6a, 6b) to be welded, characterised by the following means:

a) a tubular basic body (16, 19) which can be inserted into the tubes (6a, 6b) to be welded,

b) a sheath (2, 11) of a water-soluble material which is arranged on its periphery,

c) means (4, 4a, 5b, 7, 12, 13), arranged on the basic body (16, 19), for spreading out and pulling the sheath (2, 11) over the respectively facing tube ends (6a, 6b).

6. Arrangement according to claim 5, characterised by

a) a tubular basic body (16) with a first and a second end;

b) a longitudinally movable adjusting piston (4) axially arranged therein, said piston having a conical part at the second end;

c) a linear drive means (22) arranged at the first end for actuating the adjusting piston (4);

d) axially adjacent dogs (5a) arranged on the outside of the basic body (16);

e) cams (7a), radially arranged on the dogs (5a), which rest on the conical portion of the adjusting piston (4) through apertures in the basic body (16), and

f) springs (18) which are arranged annularly on the periphery of the basic body (16) in a groove of the dogs (5a, 5b),

whereby the dogs (5a) can be adjusted radially outwardly by actuation of the adjusting piston (4) and can be placed over the tubes (6a, 6b) in both axial directions.

7. Arrangement for carrying out the process according to claim 5, characterised by

a) a tubular basic body (19) with a first and a second end;

b) radially outwardly resilient expanding springs (13) which are arranged on the first end in a longitudinal groove (20) of the basic body (19) and expand towards the first end;

c) a tubular adjusting tube (12) which surrounds the basic body (19) in a longitudinally movable manner and which presses the expanding springs (13) into the grooves (20) when there is a longitudinal movement in the direction of the first end, and

d) a tubular positioning tube (14) which surrounds the adjusting tube (12) in a longitudinally movable manner.

**Revendications**

1.  Procédé d'établissement d'une atmosphère partielle d'un gaz protecteur pour deux tubes (6a,6b) qui sont disposés à une distance définie l'un de l'autre dans une cuve, dont les extrémités doivent être réunies par soudage, qui sont difficilement accessibles ou qui ne le sont pas et dont l'un est introduit, par une ouverture (9) d'une paroi, dans la cuve, notamment pour un échangeur de chaleur, un manchon (2,11) étant enfilé sur les tubes (6a, 6b) à réunir par soudage, caractérisé en ce qu'il consiste à constituer le manchon (2, 11) en un matériau hydrosoluble et à le placer au point de soudage en le faisant passer dans un tube (6b) ou dans l'ouverture (9) prévue pour le tube (6b) dans la paroi de la cuve, à y déployer le manchon (2,11) et à l'enfiler sur les extrémités des deux tubes (6a,6b) ou à l'enfiler sur l'extrémité de l'un des tubes (6a) et à le placer au-dessus de l'ouverture (9) prévue pour l'autre tube (6b) dans la paroi de la cuve, à rapprocher ensuite les extrémités des deux tubes (6a,6b) l'une de l'autre tout en laissant subsister une faible distance, à introduire ensuite, par l'intervalle (3) présent entre les tubes (6a,6b), du gaz protecteur dans la chambre (8) formée autour du point de soudage, et à centrer ensuite les tubes (6a,6b) en la position souhaitée pour le soudage.

2.  Procédé suivant la revendication 1, caractérisé en ce qu'il consiste à se servir comme matériau pour le manchon (2,11), d'une feuille de matière plastique en alcool polyvinylique.

3.  Procédé suivant la revendication 1, caractérisé en ce qu'il consiste à se servir comme matériau pour le manchon (2,11), d'un polymère de cellulose.

4.  Procédé suivant l'une des revendications 1 à 3, caractérisée en ce qu'il consiste à donner au manchon (2,11) une forme sensiblement cylindrique.

5.  Dispositif pour la mise en oeuvre du procédé suivant la revendication 1 au moyen d'un manchon (2,11) enfilé sur les tubes (6a,6b) à réunir par soudage, remarquable par les moyens suivants :

    a) un corps de base (16,19) tubulaire, qui peut être introduit dans les tubes (6a,6b) à réunir par soudage,

    b) un manchon (2,11) en un matériau hydrosoluble disposé à sa périphérie,

    c) des moyens (4,4a,5b,7,12,13) disposés sur le corps de base (16,19) et destinés à déployer et à enfiler le manchon (2,11) sur les extrémités des tubes (6a,6b) tournées l'une vers l'autre.

6.  Dispositif suivant la revendication 5, caractérisé par

    a) un corps de base (16) tubulaire ayant une première et une seconde extrémité;

    b) un piston de réglage (4) qui y est disposé axialement, qui peut coulisser longitudinalement et qui comporte, à la seconde extrémité, une partie conique;

    c) un dispositif d'entraînement linéaire (22) disposé à la première extrémité et destiné à manoeuvrer le piston de réglage (4);

    d) des leviers à cliquet (5) s'appliquant axialement et disposés du côté extérieur du corps de base (16),

    e) des cames (7a) disposées radialement sur les leviers à cliquet (5a) et s'appliquant à travers des ouvertures du corps base (16) sur la partie conique du piston de réglage (4), et

    f) des ressorts (18) qui sont disposés tout autour du corps de base (16) dans une gorge des leviers à cliquet (5a,5b)

    les leviers à cliquets (Sa) pouvant être déployés radialement vers l'extérieur en manoeuvrant le piston de réglage (4) et pouvant être enfilés sur les tubes (6a,6b) dans les deux sens axiaux.

7.  Dispositif pour la mise en oeuvre du procédé suivant la revendication 5, caractérisé par

    a) un corps de base (16) tubulaire ayant une première et une seconde extrémité;

    b) des ressorts d'écartement (13) qui se détendent radialement vers l'extérieur, qui sont disposés à la première extrémité dans une gorge longitudinale (20) du corps de base (19) et qui s'écartent en se dirigeant vers la première extrémité;

c) un tube de réglage (12), qui entoure le corps de base (19) avec possibilité de coulissement axial et qui, lors du déplacement longitudinal dans la direction de la première extrémité, pousse les ressorts d'écartement (13) dans les gorges (20) et

d) un tube de mise en position (14) qui entoure le tube de réglage (12) avec possibilité de coulissement longitudinal.

FIG 1

FIG 2

FIG 3

FIG 4

FIG 5

FIG 6

**FIG 7**

**FIG 8**

FIG 9

FIG 10

FIG 11

FIG 12

FIG 13

FIG 14